# EUROPEAN PATENT APPLICATION

(11) **EP 4 325 246 A1**
(43) Date of publication of application: **21.02.2024**
(21) Application number: 21936814.9
(22) Date of filing: 09.12.2021
(51) Int. Cl.: G01S 7/4863

(54) **RECEIVING DEVICE AND LASER RADAR**

(30) Priority: 16.04.2021 CN 202110414378
(71) Applicant: Hesai Technology Co., Ltd., Shanghai 201821 (CN)
(72) Inventor: CHEN, Jie, Shanghai 201821 (CN); XIANG, Shaoqing, Shanghai 201821 (CN)
(74) Representative: Fish & Richardson P.C.
(86) International application number: PCT/CN2021/136701
(87) International publication number: WO 2022/217948

(57) **Abstract**

Areceiving apparatus (1002) and a LIDAR. The receiving apparatus (1002) comprises: a circuit board (100); a plurality of receiving units (101) located on the circuit board (100) and configured to convert optical signals into electrical signals; a packaging sidewall (102) protruding from the circuit board (100) and arranged around the plurality of receiving units (101) to form a cavity (103) accommodating the receiving units (101); and a packaging layer (104) located on the packaging sidewall (102) and covering the cavity (103). The LIDAR comprises: a transmitting apparatus (1001) configured to provide a transmitting beam (L); and a receiving apparatus (1002) configured to detect an echo beam (L') formed after the transmitting beam (L) passes through a target object (1003). The installation difficulty of the receiving apparatus (1002) is reduced, and the installation speed of the receiving apparatus (1002) is improved, thereby improving the installation efficiency.

## Description

### TECHNICAL FIELD

This disclosure relates to the field of laser detection, especially to receiving apparatus and a LIDAR (Light Detection and Ranging).

### BACKGROUND

LIDAR undertakes important tasks in automatic driving, including road edge detection, obstacle recognition, and simultaneous localization and mapping (SLAM). LIDAR can precisely measure a target position (distance and angle), a motion state (speed, vibration, and posture) and a shape, and detect, recognize, distinguish and track a target. Due to its advantages such as fast measurement speed, high precision, and long-range measurement, LIDAR has been widely used in such fields as unmanned vehicle.

Specifically, a LIDAR system includes a transmitting apparatus and a receiving apparatus. The transmitting apparatus generates a transmitting beam. The transmitting beam is incident onto an object and reflected by the object to generate an echo beam, and the echo beam is received by the receiving apparatus. The receiving apparatus accurately measures the propagation time of the transmitting beam from emission to reception. Because light pulses propagate at the speed of light, and the speed of light is known, the propagation time can be converted into a distance between the object and the LIDAR system.

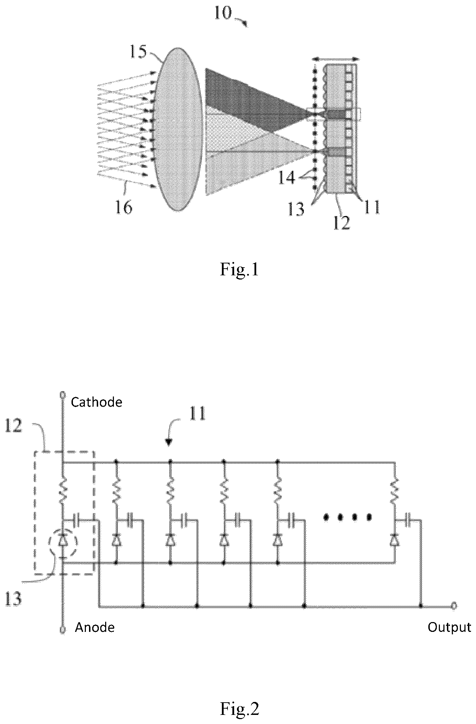

Referring to FIG. 1, it shows a diagram of optical path of a receiving apparatus in a LIDAR in a disclosed technology. The receiving apparatus 10 at least includes: an optical assembly 15, an aperture layer 14, a collimating lens 13, an optical filter 12, and a photoelectric sensor 11. The optical assembly 15 is configured to converge echo beams 16. The aperture layer 14 and the collimating lens 13 are configured to control an angle of incident light to the photoelectric sensor 11 such that incident lights to each photoelectric sensor 11 are in the same direction. The optical filter 12 is configured to block light of a wavelength that does not need to be detected. The photoelectric sensor 11 is configured to convert optical signals into electrical signals.

In the LIDAR, the photoelectric sensor 11 is typically a silicon photomultiplier (SiPM), which is a commonly-used high-sensitivity photoelectric detection component. SiPM is an array that includes a plurality of single photon avalanche diodes (SPADs). Referring to FIG. 2, it shows a diagram of circuit of the SiPM in a working state. Pixel units 12 including SPADs in the SiPM are connected in a parallel method and can work concurrently. Therefore, after some of the SPADs 13 are triggered, the rest of the SPADs 13 can still work. Still referring to FIG. 2, an output end of the various pixel units 12 connected in parallel act as an output end of the SiPM, and a signal from the output end of the SiPM is a superposition of pulse signals from all triggered SPADs, which then makes the SiPM not only obtain the sensitivity of the SPADs, but also have a certain dynamic range. Moreover, the more the quantity of the SPADs in the SiPM, the larger the dynamic range.

An unpackaged SiPM is very easily affected by external temperature, pollutants, and physical forces, making it susceptible to damage. Thus, the unpackaged SiPM needs to be packaged into one closed space, with pins extending out for installation on a printed circuit board. However, as the quantity of SPADs in the SiPM increases, the density of SiPM array becomes higher, such that the SiPM array are provided with so many densely-arranged pins, thereby increasing the difficulty of installation. In the disclosed technology, a receiving apparatus also adopts surface mount technology (SMT) to solder SiPM array on a printed circuit board, and the SMT is a technology of installing an element without pins or with short leads on the surface of a printed circuit board (PCB) or other substrates, and then soldering and assembling them together. Furthermore, when packaging is performed by the SMT, it is needed to open windows on the packaging structure, such that light can be incident onto a photoelectric sensor, which further increases the difficulty in installing high-density SiPM array.

However, the problems of difficult installation and thus slow installation speed exist among the receiving apparatus in the disclosed technology.

### SUMMARY

The problem to be solved by this disclosure is to provide receiving apparatus and a LIDAR to reduce the difficulty in installing a receiving apparatus, and improve the installation speed and efficiency of the receiving apparatus.

In order to solve the above technical problem, this disclosure provides a receiving apparatus for a LIDAR , comprising: a circuit board; a plurality of receiving units provided on the circuit board and configured to convert an optical signal into an electrical signal; a packaging sidewall protruding from the circuit board and disposed around the plurality of receiving units to form a cavity accommodating the receiving units; and a packaging layer provided on the packaging sidewall and covering the cavity.

Optionally, the packaging layer has a through hole; and the receiving apparatus further comprises: an optical filter provided on the packaging layer and covering the through hole.

Optionally, the receiving apparatus further comprises an optical assembly; and light detection surfaces of the plurality of receiving units are located on a focal plane of the optical assembly.

Optionally, the receiving apparatus further comprises: an optical assembly having a focal plane; and light detection surfaces of the plurality of receiving units are located downstream of the focal plane in a transmission direction of receiving beams.

Optionally, the through hole is located on the focal plane of the optical assembly.

Optionally, a height of the packaging sidewall is configured such that the maximum incident angle of the echo beams on the light detection surfaces is 15-20 degree after the receiving beams pass through the through hole.

Optionally, the receiving units are connected to a peripheral circuit for receiving and processing the electrical signal.

Optionally, the peripheral circuit is provided on a circuit board inside the packaging sidewall and electrically connected to the receiving units, or the peripheral circuit is provided on a circuit board outside the packaging sidewall, and the receiving apparatus is connected to the peripheral circuit through an electrical connection structure.

Optionally, the optical filter comprises a central region near the through hole and at least one annular region located around the central region, the central region and the annular region having different coating materials; and a central wavelength corresponding to the coating materials gradually increases in a direction from the central region to the annular region of the optical filter.

Optionally, the optical filter is provided on a surface of the packaging layer facing the receiving units, or on a surface of the packaging layer facing away from the receiving units.

Optionally, the optical filter is adhered to the packaging layer.

Optionally, one or all of the circuit board, the packaging sidewall, and the packaging layer is an independent component, or that the circuit board, the packaging sidewall, and the packaging layer are integrated into a one-piece structure.

Optionally, the circuit board and the packaging sidewall are integrated into a one-piece structure, and the packaging layer is an independent component.

Optionally, the circuit board and the packaging sidewall are a printed circuit board, and a peripheral circuit is formed in a circuit board located on the bottom of the cavity and is electrically connected to the plurality of receiving units.

Optionally, the packaging layer comprises a pinhole diaphragm covering the cavity.

Optionally, the packaging sidewall and the packaging layer are integrated into a one-piece structure, and the circuit board is an independent component.

Optionally, the one-piece structure is made of an insulating material or a metal material.

Optionally, each of the circuit board, the packaging sidewall, and the packaging layer is an independent component; the circuit board is a printed circuit board; the packaging sidewall is an insulating sidewall; and the packaging layer is a metal layer.

Optionally, the plurality of receiving units are arranged in a matrix method, or the plurality of receiving units are alternatively arranged in a row or column direction.

Correspondingly, this disclosure also provides a LIDAR, comprising: a transmitting apparatus for providing a transmitting beam, and a receiving apparatus provided by the embodiments of this disclosure for detecting an echo beam formed by the transmitting beam via an object.

Optionally, the transmitting apparatus is a multi-light-point vertical cavity surface emitting laser, or a single-light-point vertical cavity surface emitting laser.

Optionally, the transmitting apparatus comprises a plurality of transmitting units for providing the transmitting beam respectively; and the LIDAR comprises a plurality of receiving apparatus corresponding to the transmitting units, the plurality of receiving apparatuses are connected to a peripheral circuit which is configured to receive and process electrical signals from respective receiving apparatus.

This disclosure has the following advantages:

In the receiving apparatus of this disclosure, the receiving units are packaged on the circuit board by the packaging sidewall and the packaging layer. On the one hand, the receiving units are directly disposed on the circuit board to facilitate electrical connection to the circuit board; On the other hand, the packaging sidewall and the packaging layer form a cavity for accommodating the receiving units, thereby achieving isolation of the receiving units from the outside. Moreover, by adjusting the height, thickness, transparency, and other parameters such as whether or not create holes of the packaging sidewall and the packaging layer, the optical parameter requirements of an external optical system for the receiving unit can be met. Therefore, this disclosure provides a receiving apparatus in a simple structure, which reduces the difficulty in installing the receiving apparatus and improves the installation speed and efficiency.

### BRIEF DESCRIPTION OF DRAWINGS

FIG. 1 is a schematic diagram of optical path in a receiving apparatus of a LIDAR according to the disclosed technology;
FIG. 2 is a schematic diagram of circuit in a photoelectric sensor according to the disclosed technology;
FIG. 3 is a side view of a receiving apparatus according to a first embodiment of this disclosure;
FIG. 4 is a top view of the receiving apparatus shown in FIG. 3;
FIG. 5 is a top view of a receiving apparatus according to a second embodiment of this disclosure;
FIG. 6 is a top view of a receiving apparatus according to a third embodiment of this disclosure;
FIG. 7 is a top view of a receiving apparatus according to a fourth embodiment of this disclosure;
FIG. 8 is a top view of a receiving apparatus according to a fifth embodiment of this disclosure;
FIG. 9 is a side view of a receiving apparatus according to a sixth embodiment of this disclosure;
FIG. 10 is a side view of a receiving apparatus according to a seventh embodiment of this disclosure;
FIG. 11 is a side view of a receiving apparatus according to an eighth embodiment of this disclosure;
FIG. 12 is a side view of a receiving apparatus according to a ninth embodiment of this disclosure;
FIG. 13 is a schematic diagram of an optical filter in a receiving apparatus according to a tenth embodiment of this disclosure;
FIG. 14 shows the principle of the blue shift characteristics of the optical filter;
FIG. 15 is a partial side view of the receiving apparatus shown in FIG. 14;
FIG. 16 is a schematic diagram of a LIDAR according to an embodiment of this disclosure;
FIG. 17 is a schematic diagram of a transmitting apparatus of the LIDAR according to an embodiment of this disclosure; and
FIG. 18 is a schematic diagram of an alternative transmitting apparatus of the LIDAR according to an embodiment of this disclosure.

### DESCRIPTION OF EMBODIMENTS

As described in the BACKGROUND, there is the problem of difficulty in the installation of a photoelectric sensor in the existing technology.

In order to solve the technical problem, an embodiment of this disclosure provides a receiving apparatus for a LIDAR, including: a circuit board; a plurality of receiving units provided on the circuit board and configured to convert an optical signal into an electrical signal; a packaging sidewall protruding from the circuit board and disposed around the plurality of receiving units to form a cavity accommodating the receiving units; and a packaging layer provided on the packaging sidewall and covering the cavity.

In the receiving apparatus according to the embodiment of this disclosure, the receiving units are packaged on the circuit board by using the packaging sidewall and the packaging layer. On the one hand, the receiving units are directly provided on the circuit board to facilitate electrical connection with the circuit board; On the other hand, the packaging sidewall and the packaging layer form a cavity for accommodating the receiving units, thereby achieving isolation of the receiving units from the outside. Moreover, by adjusting the height, thickness, transparency, and other parameters (such as whether or not create holes) of the packaging sidewall and the packaging layer, the optical parameter requirements of an external optical system for the receiving units can be met. Therefore, the embodiment of this disclosure provides a receiving apparatus with a simple structure, which reduces the difficulty in installing the receiving apparatus and improves the installation speed and efficiency.

In order to make the above-mentioned objectives, features, and advantages of this disclosure more obvious and easy to understand, some specific embodiments of this disclosure will be explained below in detail by referring to the drawings.

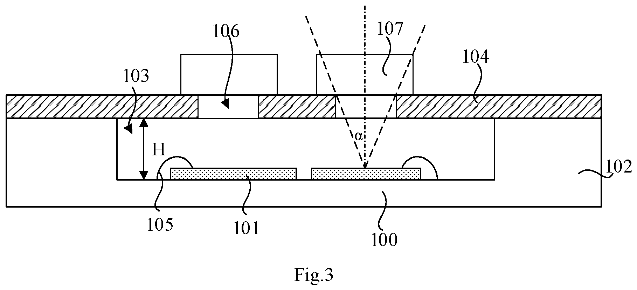

Referring to FIG. 3, it shows a side view of a receiving apparatus according to a first embodiment of this disclosure. The receiving apparatus can be applied to a LIDAR for detecting echo beams. The receiving apparatus according to this embodiment includes: a circuit board 100, receiving units 101, a packaging sidewall 102, and a packaging layer 104. Furthermore, the circuit board 100 and the packaging sidewall 102 are integrated into a one-piece structure, and the packaging layer 104 is an independent component.

The circuit board 100 is a printed circuit board (PCB), on which a connecting wire is formed for an electrical connection between the receiving units 101 and a peripheral circuit or other electrical elements.

The peripheral circuit is formed in the receiving apparatus, the plurality of receiving units 101 are connected to the peripheral circuit, the electrical signals formed by the receiving units 101 are transmitted to the peripheral circuit, and the electrical signals are received and processed by the peripheral circuit.

For example, the peripheral circuit can be one or more of a power supply switching circuit, a multiplexing circuit, a signal amplifying circuit, and a signal sampling circuit. Among them, the power supply switching circuit is configured to select and power receiving units; the multiplexing circuit is configured to select one of receiving units for signal output; the signal amplification circuit is configured to amplify electrical signals generated by the receiving units; and the signal sampling circuit is configured to sample the amplified electrical signals.

In this embodiment, the peripheral circuit is further formed on the circuit board 100, more specifically, the peripheral circuit is formed on the circuit board 100 located inside the packaging sidewall, and a connecting end of the peripheral circuit is exposed on a surface of the circuit board 100, improving the structural integration of the receiving apparatus. Alternatively, the peripheral circuit electrically connected to the receiving units 101 further can be attached below the circuit board 100 to simplify the structure of the circuit board 100.

It is noted that in other embodiments, the peripheral circuit can also be provided on a circuit board outside the packaging sidewall 102, and the receiving apparatus is connected to the peripheral circuit by an electrical connection structure (e.g., a connecting plug, a wiring structure, or a wire bonding).

The plurality of receiving units 101 are on the circuit board 100 and are configured to convert optical signals into electrical signals. The receiving unit 101 includes a light detection surface (e.g., a photosensitive surface), and echo beams of the LIDAR are incident onto the light detection surface to perform detection.

It is noted that the receiving apparatus can further include: an optical assembly (not shown in the figures) for converging echo beams. In this embodiment, light detection surfaces of the plurality of receiving units 101 are located on a focal plane of the optical assembly so as to enhance the intensity of detection light and further improve the detection precision of the receiving apparatus.

In this embodiment, each of the receiving units 101 is a single unpackaged SiPM, and a plurality of SiPMs are packaged after being arranged into a SiPM array, thereby forming a receiving apparatus. In the packaging process, each of connecting ends in a single unpackaged SiPM will be electrically connected to the peripheral circuit. Moreover, the difference from an integrated circuit lies in that the optical performance of unpackaged photoelectric apparatus also needs to be considered in the receiving apparatus in the embodiment of this disclosure.

During packaging, the receiving units 101 can be directly attached to the circuit board 100 to achieve electrical connection between the receiving units 101 and connecting ends on the circuit board 100. In this embodiment, a receiving unit 101 is a single unpackaged SiPM, and the circuit board 100 is a PCB.

Specifically, a conductive or non-conductive adhesive (e.g., a silver adhesive) and a gold-tin solder can be applied at a corresponding position on the PCB in advance by means of adhesive dispensing, and then a high-precision SMT machine is configured to suck a single unpackaged SiPM to a connecting end on the PCB. For a SiPM array, SiPMs can be installed one by one at corresponding positions according to the above-mentioned steps, so as to form a SiPM array. For example, when a SiPM array arranged in a single column, SiPMs can be installed one by one along the vertical direction (column direction) according to the above-mentioned steps, so as to form a SiPM array in the column direction. This method of surface mounting shows higher precision and lower installation difficulty.

The packaging sidewall 102 in the receiving apparatus of this embodiment is in a one-piece structure integrated with the circuit board 100. Specifically, the packaging sidewall 102 is a PCB protruding from a surface of the circuit board 100. The packaging sidewall 102 is disposed around the plurality of receiving units 101 to form a cavity 103 accommodating the receiving units 101, thereby sealing the receiving units 101 on a surface of the circuit board 100. A peripheral circuit is formed on the PCB which on the bottom of the cavity 103.

In practical applications, the PCB is customized to form a PCB groove. A horizontal portion of the PCB groove located on the groove bottom is used as the circuit board 100, and a sidewall portion of the PCB groove is used as the packaging sidewall 102 protruding from the circuit board 100.

At the time of performing surface mounting, the plurality of unpackaged receiving units 101 are placed in the PCB groove according to a certain arrangement method. After surface mounting, each of connecting ends in the receiving units 101 is electrically connected to the peripheral circuit by wire bonding 105 or other methods.

The packaging layer 104 is provided on the packaging sidewall 102 and covers the cavity 103, thereby sealing the receiving units 101 in a direction perpendicular to the circuit board 100 (i.e., in the direction of H).

In this embodiment, the packaging layer 104 is a pinhole diaphragm. A pinhole diaphragm is a component in an optical system which limits echo beams. In this embodiment, since a SiPM is used, even weak echo beams still can be detected. Thus, the pinhole diaphragm can block most of echo beams, thereby defining an imaging field of view, and configuring to prevent ambient beam and stray beam in echo beams, and also seal the receiving units.

A plurality of through holes 106 are formed in the packaging layer 104 for limiting echo beams projected to the receiving units 101. Specifically, the packaging layer 104 is a pinhole diaphragm covering the cavity, and an opening in the pinhole diaphragm is at a position corresponding to a position of the photosensitive surface in a receiving unit 101. The meaning of "position corresponding" here refers to that the pinhole center in the pinhole diaphragm coincides with the center of the photosensitive surface in a direction perpendicular to the circuit board 100, so that more beams passing through the pinhole diaphragm can be detected by the receiving units 101, which improves the detection precision of the receiving apparatus.

In the embodiment of this disclosure, a height H of the packaging sidewall 102 also determines a distance between the pinhole diaphragm and the receiving unit 101, thereby also configuring to define an incident angle α of incident light projected to the receiving unit 101.

Still referring to FIG. 3, in this embodiment, the receiving apparatus further includes an optical filter 107 provided on the packaging layer 104 and covering the through holes 106, the optical filter 107 is configured to block light does not need to be detected and transmit light to be detected.

In this embodiment, the optical filter 107 is fixed on a surface of the packaging layer 104 facing away from the receiving units 101 by adhering.

In practical applications, the plurality of receiving units 101 are usually arranged into a matrix on the circuit board 100, and the optical filter 107 can be a strip-shaped along the column direction, that is, the receiving units 101 in the column direction share the same optical filter 107, thereby simplifying the structure of the receiving apparatus.

In the embodiment of this disclosure, the optical filter 107 is fixed on the packaging layer 104, and correspondingly, the height H of the packaging sidewall 102 also determines a distance between the optical filter 107 and the receiving units 101.

In summary, the height H of the packaging sidewall 102 is not only configured to define the spatial dimension of the cavity 103, but also has an impact on the optical performance of the receiving apparatus (an incident angle α of the echo beam on the photosensitive surface of the receiving unit 101).

Specifically, when the through holes 106 are constant, changing the height H can change the incident angle α; or when the height H is constant, changing the size of the through holes 106 can also change the incident angle α.

When the size of the through holes 106 is determined, if the height H of the packaging sidewall 102 is too large, it makes the incident angle α too small; and if the height H of the packaging sidewall 102 is too small, then the spatial dimension is relatively small, which affects packaging of the receiving units 101. The height H of the packaging sidewall is set such that the maximum incident angle α on the light detection surfaces is 15-20 degrees after receiving beams pass through the through holes.

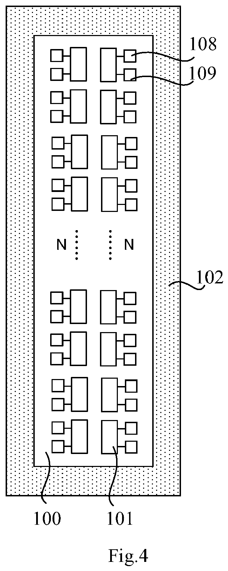

FIG. 4 shows a top view of the receiving apparatus shown in FIG. 3. In this embodiment, the receiving unit 101 provided on the circuit board 100 and packaged in the cavity is a single SiPM, and a plurality of SiPMs packaged on the circuit board 100 by packaging sidewall 102 are arranged in an array.

One packaging unit of the receiving apparatus in this embodiment includes 2N SiPMs that are arranged in a matrix of 2 columns and N rows.

Specifically, each of SiPMs includes an anode, a cathode 108, and a FASTOUT end 109. Taking each column of SiPMs sharing an anode as an example, the anode shared by the SiPMs is located on a surface facing towards the circuit board 100, and a contact-type electrical connection to the circuit board 100 can be adopted; the cathode 108 and the FASTOUT end 109 unshared are terminals located on the circuit board 100, respectively, and the two terminals can be electrically connected to the peripheral circuit by the wire bonding 105, thereby packaging the plurality of receiving units 101.

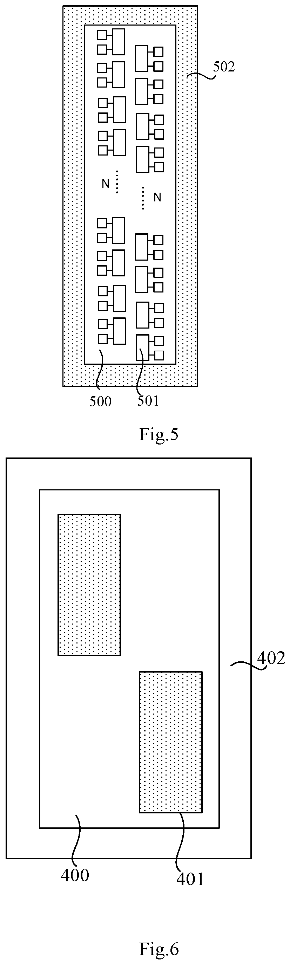

Referring to FIG. 5, FIG. 5 shows a top view of a receiving apparatus according to a second embodiment of this disclosure. A receiving unit 501 in this embodiment is also a single SiPM. The difference from the embodiment shown in FIG. 4 lies in that the 2N SiPMs in this embodiment are arranged in two columns, and the two columns of SiPMs are alternatively arranged.

It is noted that the packaging method of the receiving apparatus of this disclosure not only can be used to package 2N SiPMs, but also to package a larger quantity of SiPMs.

In other embodiments, under the premise of meeting the detection resolution requirement, the quantity of SiPMs provided in one packaging unit can be further increased, and the arrangement method can also be altered otherwise.

It is noted that in the above-mentioned embodiments, a plurality of unpackaged SiPMs are arranged into an array and then packaged individually, with a plurality of SiPM arrays packaged individually on the PCB (as shown in FIGS. 4 and 5). In other embodiments, all the unpackaged SiPMs on the PCB can also be packaged as a whole. Referring to FIG. 6, FIG.6 shows a top view of a receiving apparatus according to a third embodiment of this disclosure. The difference between this embodiment and the first embodiment lies in that the receiving unit 401 in this embodiment is a SiPM array. The SiPM array includes a plurality of SiPMs. It is noted that, for the purpose of a concise drawing, not every SiPM in the SiPM array is illustrated here. The plurality of SiPMs in the SiPM array can be arranged in a matrix method (in an arrangement method as shown in FIG. 4), or adjacent columns of SiPMs can be alternatively arranged (in an arrangement methodas shown in FIG. 5). The receiving unit 401 provided on the circuit board 400 and packaged in a cavity is a SiPM array, and the quantity of receiving units 401 packaged on the circuit board 400 by packaging sidewall 402 is two, and the two SiPM arrays are alternatively arranged in a column direction.

In other embodiments, the two receiving units 401 can also be arranged in one row.

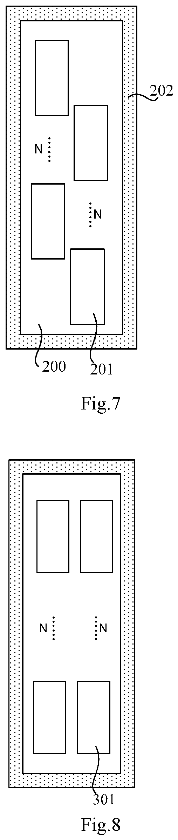

It is noted that the packaging method of the receiving apparatus of this disclosure not only can be used to package two SiPM arrays, but also to package more SiPM arrays. Referring to FIG. 7, FIG. 7 shows a top view of a receiving apparatus according to a fourth embodiment of this disclosure. In this embodiment, the receiving unit 201 is a SiPM array, and the quantity of receiving units 201 packaged on the circuit board 200 by packaging sidewall 202 is 2N (N is a natural number greater than 1), which are arranged in two columns, each of columns including N SiPM arrays. The 2N SiPM arrays is alternatively arranged along the column direction.

Referring to FIG. 8, FIG. 8 shows a top view of a receiving apparatus according to a fifth embodiment of this disclosure. In this embodiment, the receiving unit 301 is a SiPM array, which differs from FIG. 7 in that the receiving unit 301 is arranged into a matrix with two columns and N rows (an N-row and 2-column matrix).

The circuit board, the packaging sidewall, and the packaging layer together form one packaging unit. Correspondingly, in other embodiments, on the premise of meeting the detection resolution requirement, the quantity of SiPM arrays provided in one packaging unit can be further increased, and the arrangement method is not limited to be alternatively arranged or a matrix arrangement. For example, the receiving units can be arranged in three columns, four columns...; the receiving units can also be alternatively arranged in a row direction; and so on. It is noted that in the first embodiment, the circuit board and the packaging sidewall are integrated into a one-piece structure, but the packaging layer is an independent component. The embodiments of this disclosure make no limitation of whether the circuit board, the packaging sidewall, and the packaging layer are independent or one-piece. Specifically speaking, in the receiving apparatus of any embodiment of this disclosure, one or all of the circuit board, the packaging sidewall, and the packaging layer is an independent component, or the circuit board, the packaging sidewall, and the packaging layer are integrated into a one-piece structure.

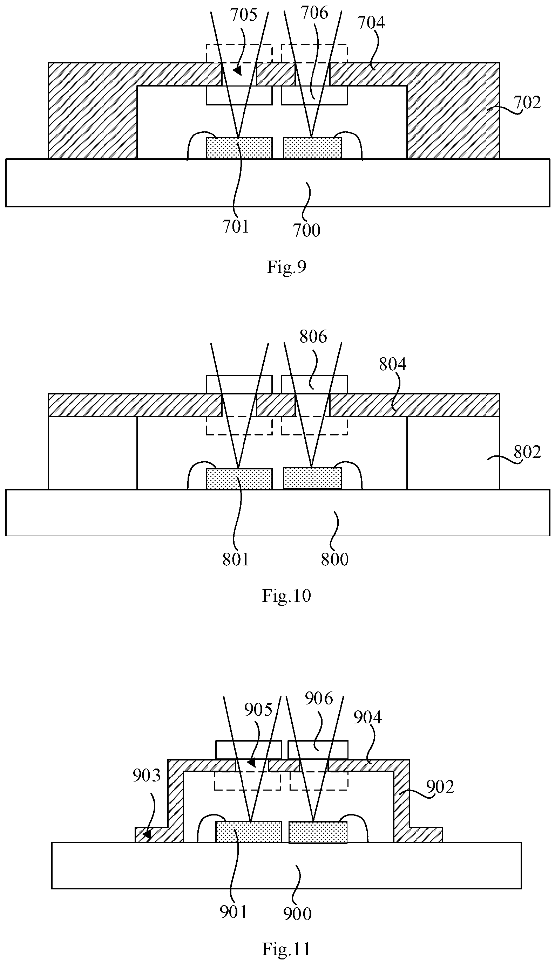

Referring to FIG. 9, FIG. 9 shows a side view of a receiving apparatus according to a sixth embodiment of this disclosure. The similarities between this embodiment and the first embodiment of this disclosure will not be repeated, and the differences between this embodiment and the first embodiment lie in that the packaging sidewall 702 and the packaging layer 704 are integrated into a one-piece structure, while the circuit board 700 is an independent component. Specifically, the one-piece structure of the packaging sidewall 702 and the packaging layer 704 forms a sealing cover that seals the receiving units 701 on the circuit board 700.

The packaging sidewall 702 and the packaging layer 704 can be an all-plastic structure, and be formed by injection molding. Through holes 705 in the packaging layer 704 can also be formed by injection molding, and the packaging layer 704 with the through holes 705 can act as an aperture.

It is noted that in other embodiments, the one-piece structure with the packaging sidewall and the packaging layer can also be made of other materials, for example, the one-piece structure with the packaging sidewall and the packaging layer is made of a metal material or a PCB material.

Moreover, the through holes can also be formed in other methods. For example, after the packaging layer is formed, the through holes are then formed by producing an opening (e.g., forming an opening by laser, or applying a pattern after coating) in the packaging layer.

A further difference between this embodiment and the first embodiment lies in that an optical filter 706 is located on a surface of the packaging layer 704 facing the receiving units 701 in this embodiment. The optical filter 706 is fixed inside the sealing cover, which can reduce the probability of the optical filter falling off in subsequent processes.

In the packaging process, after receiving units 701 are attached to the circuit board 700 and the wire bonding is completed, the optical filter 706 is adhered on an inner wall of the packaging layer 704 at a position corresponding to the through holes 705, and the packaging sidewall 702 and the packaging layer 704 in a one-piece structure are then adhered or clamped on the circuit board 700, thereby sealing the receiving units 701.

It is noted that the optical filter 706 can also be provided on a surface of the packaging layer 704 facing away from the receiving units 701, and can be adhered after the packaging sidewall 702 and the packaging layer 704 in a one-piece structure are fixed on the circuit board 700.

Referring to FIG. 10, FIG. 10 shows a side view of a receiving apparatus according to a seventh embodiment of this disclosure. The similarities between this embodiment and the first embodiment of this disclosure will not be repeated, and the difference between this embodiment and the first embodiment lies in that each of the circuit board 800, the packaging sidewall 802, and the packaging layer 804 is an independent component. In this way, each of components can be formed by a more suitable material selected according to its own function, which is not limited by materials of other components, thereby achieving a better flexibility.

In this embodiment, the circuit board 800 is a printed circuit board; the packaging sidewall 802 is an insulating sidewall, for example, made of plastic, and the packaging layer 804 is a metal layer. In other embodiments, the packaging sidewall can be made of metal or PCB, and the packaging layer can also be made of plastic.

Correspondingly, the optical filter 806 can be provided on a surface of the packaging layer 804 facing the receiving units 801, or on a surface of the packaging layer 804 facing away from the receiving units 801.

Referring to FIG. 11, FIG. 11 shows a side view of a receiving apparatus according to an eighth embodiment of this disclosure. Both this embodiment and the seventh embodiment adopt such a configuration that the packaging sidewall 902 and the packaging layer 904 are integrated into a one-piece structure, and the circuit board 900 is an independent component. The difference therebetween lies in that in this embodiment, the packaging sidewall 902 and the packaging layer 904 are both made of metal material.

When a metal material is adopted, the one-piece structure can be formed by semiconductor technology, the semiconductor technology can reduce the thickness of the packaging sidewall 902 and the packaging layer 904, which thereby can reduce the size of the packaging structure (both the projection area on the circuit board and the height perpendicular to the circuit board are reduced), and then increase the density of the packaged units that can be arranged in the receiving apparatus.

Moreover, when the thickness decreases, in order to increase the adhesion between the one-piece structure and the circuit board 900, the area of an adhering surface between the one-piece structure and the circuit board 900 can be increased by a fixed extension 903. Specifically, when a metal layer is deposited in the process, a portion of the metal material can also be deposited on the substrate to form the fixed extension 903. the one-piece structure is adhered on the circuit board 900 by the fixed extension 903, because there is a relatively large contact area between the fixed extension 903 and the circuit board 900, more adhesive can be applied, thereby increasing the firmness of the receiving apparatus.

Correspondingly, in this embodiment, the optical filter 906 can be provided on a surface of the packaging layer 904 facing the receiving units 901, or on a surface of the packaging layer 904 facing away from the receiving units 901.

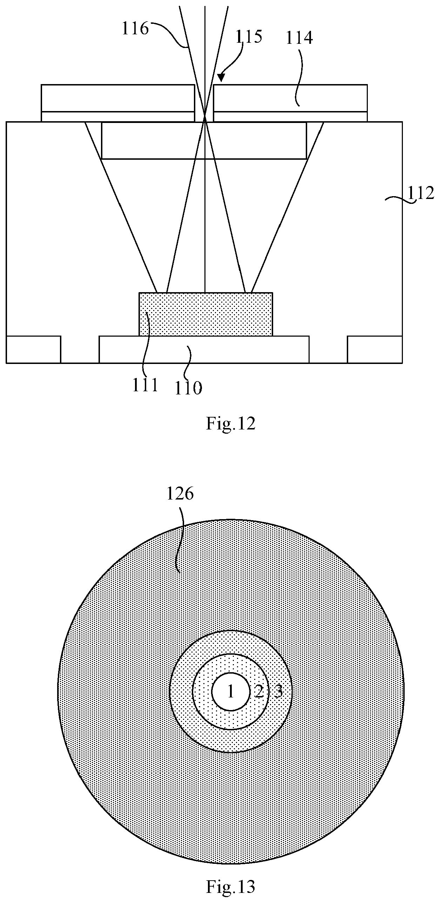

Referring to FIG. 12, FIG. 12 shows a side view of a receiving apparatus according to a ninth embodiment of this disclosure. The difference between this embodiment and the first embodiment lies in that in this embodiment, light detection surfaces of the plurality of receiving units 111 are located downstream of a focal plane of an optical assembly in a transmission direction of receiving beams.

It is noted that when the light detection surface of the receiving unit 111 is disposed on a focal plane of the optical assembly, receiving beams (i.e., echo beams of the LIDAR) have a relatively small imaging area on the focal plane. Taking the receiving unit 111 as of SiPM as an example, due to the small imaging area, the quantity of triggered SPADs in the SiPM is relatively small, correspondingly, the dynamic range of the SiPM is limited, thereby easily saturated. Moreover, fewer triggered SPADs tend to cause the pulses to be relatively dispersed, thereby resulting in poorer ranging precision, which requires multiple measurements to improve better performance.

In the embodiment of this disclosure, because the light detection surface of the receiving unit 111 is located downstream of the focal plane of the optical assembly, a light spot on the light detection surface is out of focus, so that echo beams can cover a relatively large area on the SiPM, thereby allowing a larger quantity of SPADs to be disposed, and then improving the performance of the SiPM.

Specifically, in the receiving apparatus of the embodiment of this disclosure, the through hole 115 of the packaging layer 114 is located on the focal plane of the optical assembly, and correspondingly, in the transmission direction of receiving beams 116, the light detection surface of the receiving unit 111 is located downstream of the focal plane.

Moreover, in this embodiment, the packaging sidewall 112 is located between the circuit board 110 and the packaging layer 114, and a height of the packaging sidewall 112 is configured to determine a distance between the light detection surface and the focal plane, thereby adjusting the divergence angle of the receiving beams and then adjusting the size of the light spot on the light detection surface.

Referring to FIG. 13, FIG. 13 shows a schematic diagram of an optical filter in a receiving apparatus according to a tenth embodiment of this disclosure. The difference between this embodiment and the tenth embodiment lies in that the optical filter 126 includes a central region 1 near the through hole and at least one annular region 2, 3 located around the central region 1, the central region 1 and the annular regions 2, 3 having different coating materials; and in a direction from the central region 1 to the annular regions 2, 3 of the optical filter 126, a central wavelength of the coating materials increases.

By partitioning the optical filter, the embodiment of this disclosure can reduce central wavelength shifting due to incident light at different angles projected to the optical filter, and then make the difference between wavelengths of light passing through the optical filter and reaching the receiving unit relatively small.

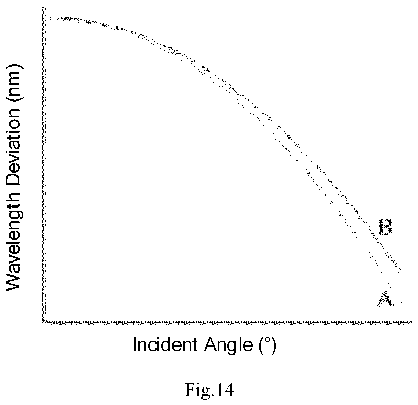

The working principle of the optical filter according to the embodiment of this disclosure will be explained below with reference to the curve diagram shown in FIG. 14. The horizontal axis in FIG. 14 represents an incident angle, and the vertical axis represents a shift of the central wavelength. Curves A and B correspond to the results of testing different optical filters respectively, indicating that a central wavelength passing through the optical filter gradually decreases as the incident angle projected to the optical filter gradually increases. For example, for the optical filter to which curve A corresponds, when the incident angle is 0 degree, the central wavelength of the optical filter is 884 nm; and when the incident angle is 15 degrees, the central wavelength of the optical filter is 881 nm, which means that the central wavelength is reduced by 3 nm. For the optical filter to which curve B corresponds, when the incident angle is 0 degree, the central wavelength of the optical filter is 884 nm; and when the incident angle is 15 degrees, the central wavelength of the optical filter is 881.5 nm, which means that the central wavelength is reduced by 2.5 nm. Such phenomenon is the blue shift characteristic of the optical filter, which means that the central wavelength of the optical filter shifts towards a short-wavelength as the incident angle increases.

Since light beams through the through hole in the packaging layer can be at different incident angles projected to the optical filter, due to the blue shift characteristic, the wavelength is shifted when light passes through the same optical filter at different incident angles. Correspondingly, in the embodiment of this disclosure, different coating materials are disposed in different regions on the optical filter, so that the incident angle is relatively small in the central region near the through hole, the central wavelength of the coating in the optical filter is relatively small; and the incident angle is relatively large in the peripheral annular regions away from the through hole, the central wavelength of the coating in the optical filter is relatively large, which thereby can reduce the deviation of the central wavelength of the optical filter caused by the blue shift characteristic.

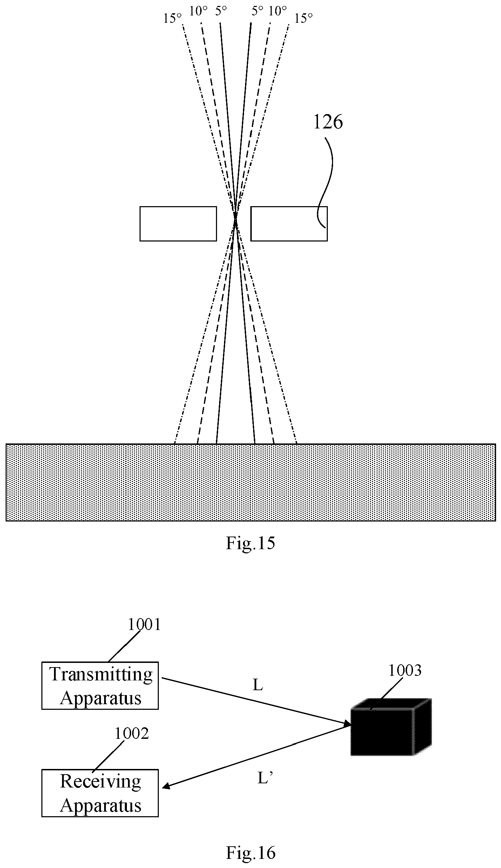

Figure 13 is a partial side view of the receiving apparatus shown with reference to Figure 15apparatus, in the embodiment of this disclosure, a region corresponding to an incident angle within 5 degrees is the central region 1, which adopts a first coating material; a region corresponding to an incident angle of 5-10 degrees is a first annular region 2 outside the central region 1, which adopts a second coating material; and a region corresponding to an incident angle of 10-15 degrees is a second annular region 3 outside the first annular region 2, which adopts a third coating material. A central wavelength of the third coating material is greater than that of the second coating material, and a central wavelength of the second coating material is greater than that of the first coating material. By disposing different coatings in different regions of the optical filter according to different incident angles, the embodiment of this disclosure enables a deviation of the center wavelength in different regions of the optical filter to be less than 1 nm.

The embodiment of this disclosure can achieve a higher dynamic range by a relatively large incident angle, and also reduce the blue shift characteristic by the aforementioned coatings on the optical filter, thereby better limiting background light and improving the detection precision of the receiving apparatus.

In order to solve the technical problem, an embodiment of this disclosure further provides a LIDAR. Referring to FIG. 16, FIG. 16 shows a schematic diagram of a LIDAR according to an embodiment of this disclosure. The LIDAR includes a transmitting apparatus 1001 for providing a transmitting beam L, and a receiving apparatus 1002 provided in embodiments of this disclosure for detecting an echo beam L' formed by the transmitting beam through an object 1003.

The receiving apparatus of the LIDAR in the embodiment of this disclosure reduces the difficulty in installing the receiving apparatus, and improves the installation speed and efficiency of the receiving apparatus.

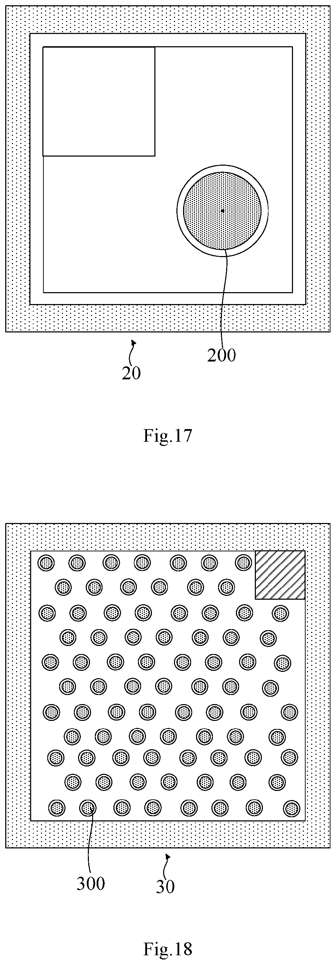

Referring to FIG. 17, FIG. 17 shows a schematic diagram of a transmitting apparatus of the LIDAR according to an embodiment of this disclosure, the transmitting apparatus is a single-point vertical cavity surface emitting laser (VCSEL). Specifically, the transmitting apparatus 20 includes one light emitting point 200. Taking a single-light point VCSEL with a 5-layer structure as an example, the power density can be up to 5 kilowatts per square millimeter. Compared to a multi-light point VCSEL, a single-light point VCSEL has significant advantages in power density.

Referring to FIG. 18, FIG. 18 shows a schematic diagram of an alternative transmitting apparatus of the LIDAR according to an embodiment of this disclosure, the transmitting apparatus is a multi-light-point vertical cavity surface emitting laser.

Specifically, the transmitting apparatus 30 includes a plurality of transmitting units 300 for providing transmitting beams respectively; correspondingly, the LIDAR further includes a plurality of receiving apparatus corresponding to the transmitting units; the plurality of receiving apparatuses are connected to a peripheral circuit for receiving and processing electrical signals from each of receiving apparatus, thereby performing ranging by the LIDAR.

Specifically, each of VCSELs corresponds to each of SiPMs in the receiving apparatus, so as to form a VCSEL array. The VCSEL array can be arranged in a planar or linear method, and its arrangement method is consistent with that of the SiPM array.

Moreover, in other embodiments, a plurality of VCSELs (e.g., two) can correspond to one SiPM.

The power density of the multi-light point VCSEL can be reach 1 kilowatt per square millimeter, and the multi-light point VCSEL has higher light emission efficiency, narrower bandwidth, and exhibits smaller temperature drift. With a narrowband optical filter, relatively low power can be adopted to achieve the same ranging capability, which is beneficial for the safety of human eyes during LIDAR ranging.

Although this disclosure is disclosed as above, it is not limited to this. Any person skilled in this field can make various changes and modifications without departing from the spirit and scope of this disclosure. Therefore, the scope of protection of this disclosure should be subject to the scope limited by the claims. Although this disclosure is disclosed as above, it is not limited to this. Any person skilled in this field can make various changes and modifications without departing from the spirit and scope of this disclosure. Therefore, the scope of protection of this disclosure shall be subject to the scope limited by the claims.

## Claims

1. A receiving apparatus for a LIDAR, comprising:
a circuit board;
a plurality of receiving units provided on the circuit board and configured to convert an optical signal into an electrical signal;
a packaging sidewall protruding from the circuit board and disposed around the plurality of receiving units to form a cavity accommodating the receiving units; and
a packaging layer provided on the packaging sidewall and covering the cavity.

2. The receiving apparatus of claim 1, **characterized in that** the packaging layer has a through hole; and the receiving apparatus further comprises: an optical filter provided on the packaging layer and covering the through hole.

3. The receiving apparatus of claim 1, **characterized in that** the receiving apparatus further comprises an optical assembly; and
light detection surfaces of the plurality of receiving units are located on a focal plane of the optical assembly.

4. The receiving apparatus of claim 2, **characterized in that** the receiving apparatus further comprises: an optical assembly having a focal plane; and
light detection surfaces of the plurality of receiving units are located downstream of the focal plane in a transmission direction of receiving beams.

5. The receiving apparatus of claim 4, **characterized in that** the through hole is located on the focal plane of the optical assembly.

6. The receiving apparatus of claims 4 or 5, **characterized in that** a height of the packaging sidewall is configured such that the maximum incident angle of the echo beams on the light detection surfaces is 15-20 degree after the receiving beams pass through the through hole.

7. The receiving apparatus of claim 1, **characterized in that** the receiving units are connected to a peripheral circuit for receiving and processing the electrical signal; and
the peripheral circuit is provided on a circuit board inside the packaging sidewall and electrically connected to the receiving units, or the peripheral circuit is provided on a circuit board outside the packaging sidewall, and the receiving apparatus is connected to the peripheral circuit through an electrical connection structure.

8. The receiving apparatus of claim 2, **characterized in that** the optical filter comprises a central region near the through hole and at least one annular region located around the central region, the central region and the annular region having different coating materials; and
a central wavelength corresponding to the coating materials gradually increases in a direction from the central region to the annular region of the optical filter.

9. The receiving apparatus of claim 2, **characterized in that** the optical filter is provided on a surface of the packaging layer facing the receiving units, or on a surface of the packaging layer facing away from the receiving units.

10. The receiving apparatus of claim 2, **characterized in that** the optical filter is adhered to the packaging layer.

11. The receiving apparatus of claim 1, **characterized in that** one or all of the circuit board, the packaging sidewall, and the packaging layer is an independent component, or that the circuit board, the packaging sidewall, and the packaging layer are integrated into a one-piece structure.

12. The receiving apparatus of claim 11, **characterized in that** the circuit board and the packaging sidewall are integrated into a one-piece structure, and the packaging layer is an independent component.

13. The receiving apparatus of claim 12, **characterized in that** the circuit board and the packaging sidewall are a printed circuit board, and a peripheral circuit is formed in a circuit board located on the bottom of the cavity and is electrically connected to the plurality of receiving units.

14. The receiving apparatus of claim 13, **characterized in that** the packaging layer comprises a pinhole diaphragm covering the cavity.

15. The receiving apparatus of claim 11, **characterized in that** the packaging sidewall and the packaging layer are integrated into a one-piece structure, and the circuit board is an independent component.

16. The receiving apparatus of claim 15, **characterized in that** the one-piece structure is made of an insulating material or a metal material.

17. The receiving apparatus of claim 11, **characterized in that** each of the circuit board, the packaging sidewall, and the packaging layer is an independent component; the circuit board is a printed circuit board; the packaging sidewall is an insulating sidewall; and the packaging layer is a metal layer.

18. The receiving apparatus of claim 1, **characterized in that** the plurality of receiving units are arranged in a matrix method, or the plurality of receiving units are alternatively arranged in a row or column direction.

19. A LIDAR, comprising:
a transmitting apparatus for providing a transmitting beam, and
a receiving apparatus according to any one of claims 1 to 18 for detecting an echo beam formed by the transmitting beam via an object.

20. The LIDAR of claim 19, **characterized in that** the transmitting apparatus is a multi-light-point vertical cavity surface emitting laser, or a single-light-point vertical cavity surface emitting laser.

21. The LIDAR of claim 19, **characterized in that** the transmitting apparatus comprises a plurality of transmitting units for providing the transmitting beam; and
the LIDAR comprises a plurality of receiving apparatus corresponding to the transmitting units, the plurality of receiving apparatuses are connected to a peripheral circuit which is configured to receive and process electrical signals from respective receiving apparatus.
